# EUROPÄISCHE PATENTSCHRIFT

(11) **EP 1 574 673 B1**
(45) Veröffentlichungstag und Bekanntmachung des Hinweises auf die Patenterteilung: **18.04.2007**
(21) Anmeldenummer: 04005681.4
(22) Anmeldetag: 10.03.2004
(51) Int. Cl.: F01D 17/16, F02C 6/12

(54) **Leitgitter variabler Geometrie und Turbolader mit einem solchen Leitgitter**
Variable geometry guide vanes and turbocharger with these vanes
Aubes de guidage variables et turbosoufflante avec ces aubes

(43) Veröffentlichungstag der Anmeldung: 14.09.2005
(73) Patentinhaber: BorgWarner Inc., Auburn Hills, MI 48326-2872 (US)
(72) Erfinder: Böning, Ralf, 67829 Reiffelbach (DE); Frankenstein, Dirk, 67550 Worms (DE)
(74) Vertreter: Balsters, Robert

(56) Entgegenhaltungen:
- EP-A- 1 398 463

## Beschreibung

### Gebiet der Erfindung

Die vorliegende Erfindung bezieht sich auf ein Leitgitter variabler Geometrie, insbesondere für ein Turbinengehäuse mit zentralem Auslaßstutzen, mit einem um eine zentrale Achse herum angeordneten Kranz von Leitschaufeln, die ihrerseits jeweils um eine Schwenkachse herum verschwenkbar sind, einem Schaufellagerring zum Lagern der Schaufeln rund die zentrale Achse und einem Verstellring, der relativ zum Schaufellagerring um die zentrale Achse verschwenkbar ist und mit den Schaufeln zum Verstellen von deren Winkellage jeweils um ihre Schwenkachsen verbunden ist. Verbindungen dieser letztgenannten Art sind in der verschiedensten Weise bekannt geworden und können von strahlenartig rund um die zentrale Achse an Verschwenkwellen für die Schaufeln befestigten Hebeln gebildet sein, von ineinandergreifenden Zahnsegmenten oder von Schlitznocken, welche Zapfen an den Leitschaufeln führen. Die vorliegende Erfindung ist auf keine dieser Verbindungen beschränkt. Ferner aber geht das erfindungsgemäße Leitgitter von einem solchen aus, bei dem eine Scheibe vorgesehen ist, welche eine zentrale Öffnung aufweist und dem Schaufellagerring mit einem derartigen axialen Abstand gegenüberliegt, bezogen auf die zentrale Achse, daß sich zwischen ihr und dem Schaufellagerring der Kranz von Leitschaufeln befindet. Eine Hülse ist in die zentrale Öffnung bzw. den zentralen Auslaßstutzen des Turbinengehäuses derart einsetzbar, daß die Hülse zur axialen Festsetzung des Leitgitters in einem Turbinengehäuse samt dem Leitgitter in dessen zentralen Auslaßstutzen einschiebbar und befestigbar ist

Ferner.bezieht sich die vorliegende Erfindung auch auf einen Turbolader mit einem erfindungsgemäßen Leitgitter, mit zumindest einem Turbinengehäuse, welches einen zentralen Auslaßstutzen aufweist.

### Hintergrund der Erfindung

Ein Leitgitter dieser Art ist in der nach Artikel 54(3) EPÜ offenbarten EP 1398463 A1 der Anmelderin beschrieben und hat sich in der Praxis auch sehr bewährt. An sich ist eine feste Verbindung zwischen dem Leitgitter und dem Turbinengehäuse erwünscht, in welches das Leitgitter eingebaut ist. Dort aber, wo besonders hohe Temperaturen auftreten, wie dies etwa bei einem Turbolader oder gegebenenfalls auch bei einer Sekundärluftpumpe der Fall sein kann, haben die einzelnen Teile der Konstruktion eine gewisse Tendenz zu einer unterschiedlichen Längenänderung.

Eine andere Konstruktion ist in der EP 332354 A beschrieben.

### Kurzfassung der Erfindung

Der Erfindung liegt nun die Aufgabe zugrunde, die Möglichkeit einer automatischen Anpassung an solche Dimensionsveränderung zu schaffen, ohne deshalb an Festigkeit der Verbindung zu verlieren.

Erfindungsgemäß gelingt die Lösung dieser Aufgabe dadurch, daß die Hülse an einem axial nachgiebigen Anschlag anliegend ausgebildet ist und an ihrem Außenumfang eine Anordnung zur formschlüssigen Befestigung am zentralen Auslaßstutzen des Turbinengehäuses aufweist. Es wird also erfindungsgemäß, ganz allgemein gesprochen, eine Befestigung der Hülse gewählt, welche die Vorzüge eines Kraftschlusses und eines Formschlusses miteinander kombiniert.

Diese Kombination ist dann besonders günstig, wenn die Anordnung zur formschlüssigen Befestigung ein Außengewinde umfaßt, denn dann läßt sich die Vorspannkraft des nachgiebigen Gliedes stufenlos einstellen.

Selbstverständlich kann die nachgiebige Anlage derart erfolgen,' daß mindestens eine Feder zwischen Hülse und Scheibe oder zwischen Scheibe und Turbinengehäuse eingesetzt wird. Man kann aber auf gesonderte Federn verzichten, wenn die Hülse an der Scheibe anliegt, und daß diese Scheibe selbst in Axialrichtung nachgiebig ausgebildet ist.

Die Erfindung bezieht sich ebenso auf einen Turbolader mit einem die genannten Merkmale aufweisenden Leitgitter.

### Kurzbeschreibung der Zeichnung

Weitere Einzelheiten der Erfindung ergeben sich an Hand der nachfolgenden Beschreibung eines in der Zeichnung schematisch dargestellten bevorzugten Ausführungsbeispieles. Es zeigen:
- Fig. 1: einen Axialschnitt aus dem Bereich des Überganges zwischen Turbinengehäuse und Lagergehäuse eines Turboladers, wo das erfindungsgemäße Leitgitter einer ersten Ausführungsform untergebracht ist; und

- Fig. 2: einen Axialschnitt durch die erfindungswesentlichen Teile einer bevorzugten Ausführungsform in einer Teilansicht.

### Detaillierte Beschreibung der Zeichnung

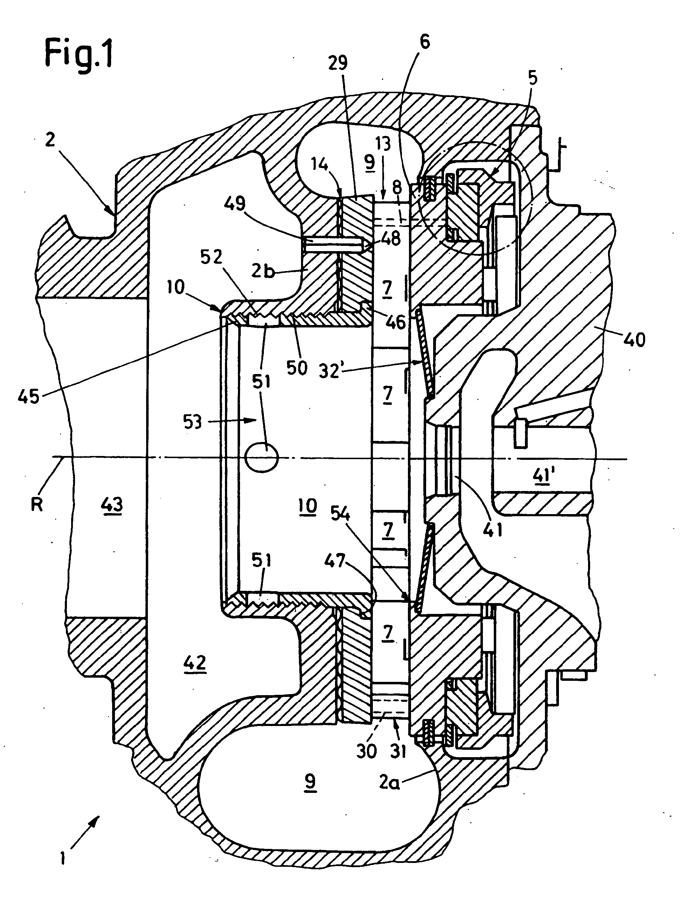

In der Zeichnung ist ein Teil eines Turbinengehäuses 2 eines Turboladers 1 dargestellt, welches in typischer Weise einen sich etwa spiralig um eine zentrale Achse R windenden Zufuhrkanal 9 für ein Fluid - im Falle eines Turboladers des Abgases eines Verbrennungsmotors - aufweist. Dieses Fluid wird dann in radialer Richtung durch einen, an sich bekannten, rund um die zentrale Achse R angeordneten Kranz von Leitschaufeln 7 einem an der Achse R gelegenen, in Fig. 1 nicht dargestellten Turbinenrotor zugeführt, der am Ende einer (ebenfalls nicht dargestellten) Welle sitzt, die in einem Lagergehäuse 40, und zwar in darin ausgebildeten Lagern 41 und 41' gelagert ist. Im Falle eines Turboladers erstreckt sich diese Welle durch dieses Lagergehäuse 40 hindurch zu einem am anderen Ende befestigten Kompressorgehäuse, dessen Kompressorrotor von der Welle - und damit von den dem Turbinengehäuse 2 zugeführten Abgasen in bekannter Weise angetrieben wird.

Es wurde bereits auf die Leitschaufeln 7 an sich bekannter Ausbildung hingewiesen, welche durch einen Verstellring 5 um ihre jeweilige Schwenkachse 8, (nur eine ist strichliert dargestellt) verstellbar sind und dabei entweder eine mehr radial zur zentralen Achse R geneigt sind oder annähernd tangential dazu verlaufen. Dadurch wird das über den Zufuhrkanal 9 zugeführte Abgas eines Verbrennungsmotors mehr oder weniger dem im Inneren des Leitschaufelkranzes befindlichen Turbinenrotor zugeführt, bevor es bei dem sich entlang der zentralen Drehachse R erstreckenden Axialstutzen 10 wieder austritt. Dieser Auslaßstutzen 10 ist hier durch einen Entkopplungsraum 42 von einer ihm folgenden Fortsetzung 43 entkoppelt, kann aber gewünschtenfalls auch direkt mit einem Auspuffsystem verbunden sein.

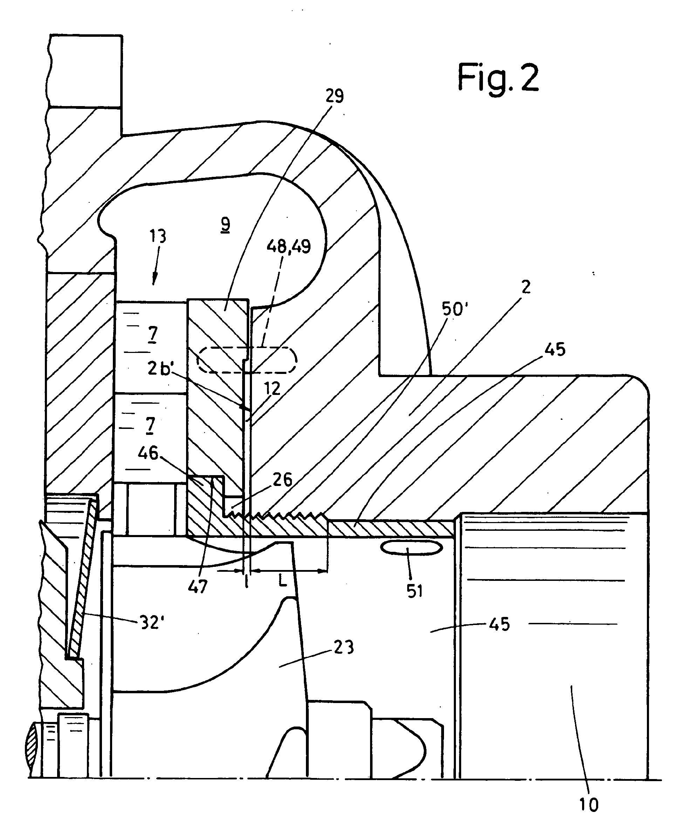

In einem durch rund um die zentrale Achse R am Schaufellagerring 6 angeordnete Abstandhalterhülsen 31 definierten Abstand ist ein die Schaufeln 7 schützender Befestigungsring bzw. eine Scheibe 29 vorgesehen, der am Rotorgehäuse 2 etwa im Bereiche des aus Fig. 1 ersichtlichen Gehäuseflansches 2b angebracht wird. Der Befestigungsring 29 wird mittels strichliert angedeuteten, z.B. durch die Hülsen 31 gesteckte Bolzen 30' am Schaufellagerring 6 befestigt, wobei in bekannter Weise die Abstandhalter 31 für einen etwas größeren Abstand sorgen, als der Breite der Schaufeln 7 entspricht, um diese bei ihrer Bewegung in allen Temperaturbereichen nicht zu behindern.'Auf diese Weise kann also das aus Fig. 2 ersichtliche Leitgitter fertig vormontiert werden, um in das Turbinengehäuse 2 eingesetzt zu werden.

Um den so geschaffenen Modul rasch und präzise in das Turbinengehäuse 2 einsetzen zu können, wird er mit einer in den zentralen Axialstutzen 10 einsetzbaren Hülse 45 mit einer zentralen Öffnung 53 verbunden, die im Prinzip lediglich in den Auslaßstutzen 10 eingesetzt zu werden braucht. Zu diesem Zweck besitzt die Hülse 45 mindestens einen Mitnehmer 46, der die Scheibe 29 - und damit den ganzen Leitgitter-Modul - beim Einsetzen in den Auslaßstutzen 10 mitnimmt und so die axiale Lage des Moduls bestimmt. Wenn hier von "mindestens einem" Mitnehmer 46 die Rede ist, so soll darunter verstanden werden, daß es möglich wäre, über den Umfang der Hülse 45 mehrere radial abstehende Pratzen oder Vorsprünge, insbesondere in gleichmäßigen Winkelabständen, vorzusehen. Bevorzugt ist es jedoch, wenn der Mitnehmer als radial sich von der Hülse 45 erstreckender, die Scheibe 29 hintergreifender Flansch 46 ausgebildet ist.

Besonders aus Fig. 1 ist ersichtlich, daß es vorteilhaft ist, wenn die Scheibe 29 an der zentralen Öffnung mindestens eine Ausnehmung 47 aufweist, in welche der mindestens eine Mitnehmer 46 eingreift, so daß er vorzugsweise mit der Fläche der Scheibe 29 bündig abschließt. Im oben erläuterten Fall mehrerer über den Umfang verteilter radialer Vorsprünge könnten auch mehrere über den Umfang verteilte Ausnehmungen vorgesehen sein. Damit würde gleichzeitig eine genaue Festlegung des Leitgitter-Moduls in Drehrichtung rund um die zentrale Achse R erfolgen. Allerdings sind solche einzelnen und präzisen Ausnehmungen schwerer herstellbar, weshalb es bevorzugt ist, wenn die Ausnehmung 47 als sich in Umfangsrichtung der Hülse 45 erstreckende Nut ausgebildet ist.

Dabei zeigt Fig. 1 deutlich, daß bei gleicher axialer Tiefe der Nut 47 und des Flansches 46 der letztere mit der Fläche der Scheibe 29 bündig abschließt, so daß die Strömungsverhältnisse im Bereich der Leitschaufeln 7 nicht beeinträchtigt werden. Natürlich wäre die Verwendung einer Ringnut 47 auch dann möglich, wenn die Hülse nur einzelne, in Winkelabständen angeordnete Vorsprünge als Mitnehmer besäße, doch führt dies dann zu einer Störung des zu den Leitschaufeln 7 strömenden Abgasstromes. Auf die Frage der Optimierung der Strömungsverhältnisse sei unten noch detailliert eingegangen.

Für die Festlegung in Umfangsrichtung ist vorzugsweise mindestens eine Bohrung 48 in der Scheibe 29 vorgesehen, die einen im Turbinengehäuse 2, und zwar in der Wand 2b, sitzenden Stift 49 (oder eine Schraube) aufnimmt. Es wurde oben bereits darauf hingewiesen, daß die Festlegung in Umfangsrichtung auch durch die Ausnehmungen (mindestens eine) erfolgen könnte. Nach einer anderen Alternative könnte die Anordnung umgekehrt sein, so daß die Scheibe 29, beispielsweise einen angeformten, Stift trägt, der in ein Loch der Wand 2b eingesetzt wird. Ferner könnte die Festlegung in Umfangsrichtung auch mit Hilfe von Schraubbolzen erfolgen, doch ist dies wegen des zusätzlichen Montageaufwandes nicht bevorzugt.

Beim dargestellten Ausführungsbeispiel ist das Turbinengehäuse 2 derart bearbeitet, daß das Einsetzen der Hülse 45 durch Einschrauben mittels eines Außengewindes der Hülse 45 bzw. einem Innengewinde des Turbinengehäuses 2 und seines Axialstutzens 10 bei 50 erfolgt. Dazu sind Ansetzlöcher 51 für ein Werkzeug vorgesehen. An sich ist die axiale Festlegung dann gesichert, wenn die Scheibe 29 an der Wand 2b anschlägt. Allerdings können Vibrationen während des Betriebes dazu führen, daß sich das Gewinde löst. Daher kann zur Sicherung die Hülse 45 angeschweißt oder auch plastisch verformt werden. Günstiger jedoch ist die später beschriebene erfindungsgemäße Lösung.

Überdies ist es zweckmäßig, ein Hitzeschild 32' zwischen dem Lagergehäuse 40 und dem vom Leitgitter umschlossenen Raum vorzusehen. Dieses Hitzeschild liegt bei der vorliegenden Ausführung einerseits an einer Fläche des Leitgitters - zweckmäßig am Schaufellagerring 6. Zu diesem Zwecke kann der Schaufellagerring 6 mindestens einen radial einwärts (bezogen auf die zentrale Achse R) gerichteten Vorsprung 54 aufweisen. Auch hier ist es (wie bei den oben besprochenen Ausnehmungen 47) wiederum möglich, mehrere, über den Innenumfang des Schaufellagerringes 6 verteilte Vorsprünge vorzusehen, doch wird man, schon aus fertigungstechnischen Gründen, einen radial nach innen ragenden Flansch als Vorsprung 54 anordnen. Anderseits liegt das Hitzeschild an einer Wand des Lagergehäuses 40. Selbstverständlich sind auch andere Anordnungen möglich.

Es ist ersichtlich, daß die Hülse 45 eine gewisse axiale Länge aufweist. Daher hat es sich gezeigt, daß die in einem Turbolader 1 auftretenden Temperaturen bzw. Temperaturunterschiede (über die Zeit) dazu führen können, daß sich die Hülse 45 axial dehnt. Ist sie nun formschlüssig mit dem Axialstutzen 10 (insbesondere durch das Gewinde 50) verbunden, so ist die einzige für eine Dehnung denkbare Richtung diejenige gegen den Flansch 46 zu. Das Resultat kann dann sein, daß dieser Flansch 46 in das Innere des Schaufelraumes 13 ragt und damit die dort dem Turbinenrad zugeführte Abgasströmung nachteilig beeinflußt.

Erfindungsgemäß wird nun die formschlüssige Befestigung, welche an sich durch beliebige Mittel, bevorzugt aber durch das Gewinde 50 erfolgt, durch eine kraftschlüssige Verbindung zwischen Gehäusewand 2b bzw. Scheibe 29 bzw. Flansch 46 ergänzt. Zu diesem Zweck liegt beim Ausführungsbeispiel der Fig. 1 zwischen der Scheibe 29 und der Gehäusewand 2b ein gewelltes Federblech oder eine Tellerfeder 14. Wird die Hülse 45 mittels des Gewindes 50 festgezogen, so verformt sich das Federelement 14, so daß die Scheibe 29 - mitgenommen vom Flansch 46 der Hülse 45 - unter einer gewissen Vorspannung an dem Federelement 14 anliegt. Damit wird das Festziehen der Hülse 45 zweckmäßig mittels eines Momentenschlüssels vorgenommen, durch den die Vorspannung bei der Montage vorherbestimmbar ist.

Kommt es nun zu einer axialen Dehnung der Hülse 45, so folgt die Scheibe 29 unter dem Druck des Federelementes 14 in Axialrichtung, so daß der Flansch 46 nie in den Strömungsraum 13 der Leitschaufeln 7 ragen kann. Aber nicht nur diese Funktion hat das Federelement 14: Es wird nämlich ebenso etwaige (z.B. plastische) Verformungen des Turbinengehäuses 2 mit der Wand 2b ausgleichen können. Damit kann sich der so eingebaute Leitgitter- Modul auch bei maximalen Betriebstemperaturen nicht lösen.

An Hand der Fig. 2 wird nun eine bevorzugte Ausführungsform beschrieben, die einerseits mit weniger Teilen auskommt, anderseits eine noch günstigere Vorspannungscharakteristik aufweist. Dafür werden für Teile gleicher Funktion dieselben Bezugszeichen verwendet wie in Fig. 1, für Teile ähnlicher Funktion zwar dieselben Bezugszeichen, jedoch mit einem Zusatz.

Zunächst fällt im Vergleich zu Fig. 1 auf, daß das Gewinde 50' wesentlich kürzer ist. Dem liegt der Gedanke zugrunde, die Hülse 45 über nur eine relativ geringe axiale Länge formschlüssig, vorzugsweise in einem Bereich zwischen ihren beiden Enden, festzulegen und sich so gegen ihre beiden Enden hin, d.i. einerseits gegen den Flansch 46 und anderseits gegen ihr frei im Axialstutzen 10 liegendes Ende hin, dehnen kann. Dies vermeidet einerseits, daß sich das Gewinde 50 (relativ lang in Fig. 1),ineinander festfressen kann, und anderseits, daß der ganze axiale Dehnungsbetrag sich nur in eine Richtung hin auswirkt.

Auch die Scheibe 29 ist im Vergleich zur Ausführungsform der Fig. 1 unterschiedlich gestaltet. Zunächst ist die Nut 47 abgestuft und nimmt nicht nur den Flansch 46 auf, sondern besitzt vorteilhaft auch eine daran anschließende radial Freistellung 26, die beispielsweise von einem Teil des Außengewindes der Hülse 45 durchsetzt ist. Die eigentliche formschlüssige Gewindebefestigung mit Außen- und Innengewinde 50' erfolgt daher nur über die Länge L. Damit kann sich die etwa mittig festgehaltene Hülse 45 sowohl gegen das (in Fig. 2 rechte) Ende des Axialstutzens 10 als auch gegen den Flansch 46 hin ungestört dehnen.

Um nun, wie im Ausführungsbeispiel nach Fig. 1, eine kraftschlüssige Verbindung zwischen der Scheibe 29 und dem Flansch 46 (allenfalls den Mitnehmern, wie oben besprochen) herzustellen, ist zu beiden Seiten der Scheibe 29 ein Freiraum vorgesehen, nämlich der Schaufelraum 13 einerseits und eine Aussparung 12 einer axialen Länge ℓ anderseits. Diese Aussparung 12 zur Schaffung eines Freiraumes kann durch eine entsprechende Formgebung der Gehäusewand 2b' erzeugt werden. Dies erfordert jedoch eine relativ aufwendige Bearbeitung, weshalb es bevorzugt ist, wenn die Scheibe 29 an der mit der Turbinenwand 2b' in Kontakt kommenden Fläche über einen, in Radialrichtung gegen die Hülse (45) zu liegenden Teil dieser Fläche derart ausgespart ist, daß der Scheibe 29 eine Axialbewegung gestattet ist.

Denn das ist der Sinn der Vorsehung solcher Freiräume, vor allem gegen die Gehäusewand 2b' zu, daß es der Scheibe 29 selbst ermöglicht wird, als Federelement zu wirken. Dabei ist es, wie ersichtlich, vorteilhaft, wenn die Scheibe 29 in ihrem radial äußeren Bereich eine formschlüssige Befestigungsanordnung in Form mindestens eines, oben an Hand der Fig. 1 bereits besprochenen Bohrung 48 mit dem Stift 49, aufweist, derart, daß sie im radial äußeren Bereich festspannbar ist, wogegen sie im radial inneren, vorzugsweise wenigstens die Hälfte des Radius, insbesondere etwa zwei Drittel, ausmachenden, Bereich nachgiebig ausgebildet ist. Je länger dieser Bereich ist, desto "weicher" ist die Federcharakteristik. Im dargestellten Ausführungsbeispiel mit einer relativ dicken Gehäusewand 2b' wird der Stift nicht von außen hindurchgesteckt wie in Fig. 1, sondern als Fixierstift jeweils in Sacklöcher 48 sowohl der Gehäusewand 2b' als auch in der Scheibe 29 hineingesteckt. Die Art dieser Befestigung ist jedoch im Rahmen der Erfindung frei wählbar. Wesentlich ist nur, daß die Anordnung der formschlüssigen Befestigungsanordnung 48, 49' im Übergangsbereich zwischen dem vollen, radial äußeren Abschnitt der Scheibe 29 und dem mit der ausgedrehten (oder derart gegossenen bzw. geformten) Aussparung 12 in vorteilhafter Weise eine Vorspannung über die inhärente Elastizität der Scheibe 29 erlaubt, wenn die Hülse 45 mit ihrem Gewinde 50 in den Axialstutzen 10 eingescghraubt wird. Dadurch kann die Vorspannung genau dosiert werden. Eine gesonderte Tellerfeder 14 (Fig. 1) entfällt dadurch.

Im Rahmen der Erfindung sind zahlreiche Variationen möglich; beispielsweise könnte im Ausführungsbeispiel nach Fig. 2 innerhalb der Aussparung 12 ein Federelement (gleichgültig welcher Art) vorgesehen werden, um die Federcharakteristik damit härter zu gestalten, doch ist dies auch so möglich, daß die formschlüssige Befestigung 48, 49' radial etwas einwärts vorgesehen wird.

Auch wurde schon erwähnt, daß die Erfindung bevorzugt an einem Turbolader angewandt wird, an sich aber auch bei anderen Strömungsmaschinen, wie Turbinen, Sekundärluftpumpen etc. zur Anwendung kommen kann.

### Bezugszeichenliste

- 1: Turbolader
- 2: Turbinen- oder Rotorgehäuse
- 3: Wälzkörper (Rollen)
- 4: Lagergehäuse
- 5: Verstellring
- 6: Schaufellagerring
- 7: Leitschaufeln
- 8: Verstellwelle, Schwenkachse
- 9: Zufuhrkanal
- 10 11: Axialstutzen, Auslassstutzen
- 12: Aussparung (Freiraum)
- 13: Schaufelraum
- 14: Federblech
- 17: Ausnehmung
- 18: Kopf bzw. Hebelende v. 19
- 19: Verstellhebel
- 20: Lauffläche v. 5
- 21: Lauffläche v. 6
- 22: Käfig- oder Haltering
- 23: Turbinenrotor
- 24: axialer Fortsatz
- 25: Löcher von 22
- 26 27 28: radiale Freistellung
- 29 30: Scheibe (Befestigungsring)
- 31: Abstandhalter
- 32': Hitzeschild
- 40: Lagergehäuse
- 41,41': Lager in 40
- 42: Entkopplungsraum
- 43: Fortsetzung von 10
- 44: Abstandhalter
- 45: Hülse
- 46: Mitnehmer, Flansch
- 47: Ausnehmung '
- 48: Bohrung
- 49: Stift
- 50: Gewinde
- 51: Ausnehmung
- 52: Vorsprung
- 53: zentrale Öffnung von 45
- 54: Vorsprung von 6

## Patentansprüche

1. Leitgitter variabler Geometrie, insbesondere für ein Turbinengehäuse (2) mit zentralem Auslaßstutzen (10), das folgendes aufweist:
einen um eine zentrale Achse (R) herum angeordneten Kranz von leitschaufeln (7), die ihrerseits jeweils um eine Schwenkachse (8) herum verschwenkbar sind;
einen Schaufellagerring (6) zum Lagern der Schaufeln (7) rund die zentrale Achse (R);
einen Verstellring (5), der relativ zum Schaufellagerring (6) um die zentrale Achse (R) verschwenkbar ist und mit den Schaufeln (7) zum Verstellen von deren Winkellage jeweils um ihre Schwenkachsen (8) verbunden ist;
eine Scheibe (29), welche eine zentrale Öffnung (53) aufweist und dem Schaufellagerring (6) mit einem derartigen axialen Abstand gegenüberliegt, bezogen auf die zentrale Achse (R), daß sich zwischen ihr und dem Schaufellagerring (6) der Kranz von Leitschaufeln (7) befindet; und
eine Hülse (45), welche in die zentrale Öffnung (53) bzw. den zentralen Auslaßstutzen (10) des Turbinengehäuses (2) derart einsetzbar ist, daß die Hülse (45) zur axialen Festsetzung des Leitgitters in einem Turbinengehäuse (2) samt dem Leitgitter in dessen zentralen Auslaßstutzen (10) einschiebbar und befestigbar ist,
**dadurch gekennzeichnet, daß**
die Hülse (45) an einem axial nachgiebigen Anschlag (29) anliegend ausgebildet ist und an ihrem Außenumfang eine Anordnung zur formschlüssigen Befestigung am zentralen Auslaßstutzen (10) des Turbinengehäuses (2) aufweist.

2. Leitgitter nach Anspruch 1, **dadurch gekennzeichnet, daß** die Anordnung zur formschlüssigen Befestigung der Hülse (45) ein Außengewinde (50) der Hülse (45) bzw. ein Innengewinde (50) des Axialstutzens (10) umfasst, wobei vorzugsweise das Außengewinde (50) nur über einen Teil der axialen Länge der Hülse (45) ausgebildet ist, insbesondere über einen zwischen ihren beiden Enden liegenden Teil.

3. Leitgitter nach Anspruch 1 oder 2, **dadurch gekennzeichnet, daß** die Hülse (45) an der Scheibe (29) anliegt, und daß diese Scheibe (29) in Axialrichtung nachgiebig innerhalb eines zu beiden Seiten vorgesehenen Freiraumes (12, 13) ausgebildet ist.

4. Leitgitter nach Anspruch 3, **dadurch gekennzeichnet, daß** die Scheibe (29) an der mit der Turbinenwand (2b') in Kontakt kommenden Fläche über einen, in Radialrichtung gegen die Hülse (45) zu liegenden Teil dieser Fläche derart ausgespart ist, daß der Scheibe (29) eine Axialbewegung gestattet ist.

5. Leitgitter nach Anspruch 3 oder 4, **dadurch gekennzeichnet, daß** die Scheibe (29) in ihrem radial äußeren Bereich eine formschlüssige Befestigungsanordnung (48, 49') aufweist, derart, daß sie im radial äußeren Bereich festspannbar ist, wogegen sie im radial inneren, vorzugsweise wenigstens die Hälfte des Radius, insbesondere etwa zwei Drittel, ausmachenden, Bereich nachgiebig ausgebildet ist.

6. Turbolader mit einem Leitgitter nach einem der vorhergehenden Ansprüche, mit zumindest einem Turbinengehäuse (2), welches einen zentralen Auslaßstutzen (10) aufweist, **dadurch gekennzeichnet, daß** die Hülse (45) an einem axial nachgiebigen Anschlag (29) anliegt, im Auslaßstutzen (10) dagegen formschlüssig befestigt ist.

7. Turbolader nach Anspruch 6, **dadurch gekennzeichnet, daß** eine Anordnung zur formschlüssigen Befestigung ein Außengewinde (50) der Hülse (45) bzw. ein Innengewinde (50) des Axialstutzens (10) umfaßt, wobei vorzugsweise das Außengewinde (50) nur über einen Teil der axialen Länge der Hülse (45) ausgebildet ist, insbesondere über einen zwischen ihren beiden Enden liegenden Teil.

8. Turbolader nach Anspruch 6 oder 7, **dadurch gekennzeichnet, daß** die Hülse (45) an der Scheibe (29) als Anschlag anliegt, und daß diese Scheibe (29) in Axialrichtung nachgiebig ausgebildet ist.

9. Turbolader nach Anspruch 8, **dadurch gekennzeichnet, daß** die Scheibe (29) an der mit der Turbinenwand (2b') in Kontakt stehenden Fläche über einen, in Radialrichtung gegen die Hülse (45) zu liegenden Teil dieser Fläche derart ausgespart ist, daß ihr eine Axialbewegung gestattet ist.

10. Turbolader nach einem der Ansprüche 6 bis 9, **dadurch gekennzeichnet, daß** die Scheibe (29) in ihrem radial äußeren Bereich eine formschlüssige Befestigungsanordnung (48, 49') aufweist, derart, daß sie im radial äußeren Bereich festspannbar ist, wogegen sie im radial inneren, vorzugsweise wenigstens die Hälfte des Radius, insbesondere etwa zwei Drittel, ausmachenden, Bereich nachgiebig ausgebildet ist.

## Claims

1. Variable geometry guide vane system, in particular for a turbine housing (2) having a central outlet nozzle (10), which comprises the following:
a ring of guide blades (7) which is arranged around the central axis (R), which guide blades in turn are in each case pivotable about a pivot axis (8);
a blade bearing ring (6) for mounting the blades (7) around the central axis (R);
an adjusting ring (5) which is pivotable about the central axis (R), relative to the blade bearing ring (6) and is connected to the blades (7) for adjusting the angular position thereof in each case about their pivot axes (8) ;
a disc (29) which has a central opening (53) and is opposite the blade bearing ring (6) with an axial distance, relative to the central axis (R), such that the ring of guide blades (7) is present between it and the blade bearing ring (6); and
a sleeve (45) which can be inserted into the central opening (53) or the central outlet nozzle (10) of the turbine housing (2) in such a way that, for axial fixing of the guide vane system in a turbine housing (2), the sleeve (45) together with the guide vane system can be inserted into and fixed in the central outlet nozzle (10) thereof,
**characterized in that** the sleeve (45) is formed so as to be adjacent to an axially yielding stop (29) and has, on its outer circumference, an arrangement for interlocking fixing on the central outlet nozzle (10) of the turbine housing (2).

2. Guide vane system according to Claim 1, **characterized in that** the arrangement for interlocking fixing of the sleeve (45) comprises an external thread (50) of the sleeve (45) or an internal thread (50) of the axial nozzle (10), the external thread (50) preferably being formed only over a part of the axial length of the sleeve (45), in particular of a part located between its two ends.

3. Guide vane system according to Claim 1 or 2, **characterized in that** the sleeve (45) rests against the disc (29), and **in that** this disc (29) is formed so as to be yielding in the axial direction within a clearance (12, 13) provided on both sides.

4. Guide vane system according to Claim 3, **characterized in that** the disc (29) is cut away on the surface which comes into contact with the turbine wall (2b'), over a part of the surface which is to be located towards the sleeve (45) in the radial direction, in such a way that the disc (29) is permitted an axial movement.

5. Guide vane system according to Claim 3 or 4, **characterized in that** the disc (29) has, in its radially outer region, an interlocking fixing arrangement (48, 49') such that it can be clamped in the radially outer region whereas it is formed to be yielding in the radially inner region preferably accounting for at least half the radius, in particular about two thirds.

6. Turbocharger having a guide vane system according to any of the preceding Claims, comprising at least one turbine housing (2) which has a central outlet nozzle (10), **characterized in that** the sleeve (45) rests against an axially yielding stop (29) but is fixed in an interlocking manner in the outlet nozzle (10).

7. Turbocharger according to Claim 6, **characterized in that** an arrangement for interlocking fixing comprises an external thread (50) of the sleeve (45) or an internal thread (50) of the axial nozzle (10), the external thread (50) preferably being formed only over a part of the axial length of the sleeve (45), in particular over a part located between its two ends.

8. Turbocharger according to Claim 6 or 7, **characterized in that** the sleeve (45) rests against the disc (29), and **in that** the disc (29) is formed so as to be yielding in the axial direction.

9. Turbocharger according to Claim 8, **characterized in that** the disc (29) is cut away on the surface which is in contact with the turbine wall (2b'), over a part of the surface which is to be located towards the sleeve (45) in the radial direction, in such a way that said sleeve is permitted an axial movement.

10. Turbocharger according to any of Claims 6 to 9, **characterized in that** the disc (29) has, in its radially outer region, an interlocking fixing arrangement (48, 49') such that it can be clamped in the radially outer region whereas it is formed to be yielding in the radially inner region preferably accounting for at least half the radius, in particular about two thirds.

## Revendications

1. Aubes de guidage à géométrie variable, en particulier pour un carter de turbine (2) ayant une tubulure d'échappement (10) centrale, présentant les propriétés suivantes :
une couronne d'aubes directrices (7) disposée autour d'un axe central (R), qui, de leur côté, sont susceptibles de pivoter chacune autour d'un axe de pivotement (8) ;
un anneau de paliers d'aubes (6) pour le montage en palier des aubes (7) autour de l'axe central (R) ;
une bague de manoeuvre (5), susceptible de pivoter par rapport à l'anneau de paliers d'aubes (6) autour de l'axe central (R) et reliée aux aubes (7) pour le réglage de leurs positions angulaires respectives autour de leurs axes de pivotement (8) ;
un disque (29), présentant une ouverture centrale (53) et placé face à l'anneau de palier d'aubes (6) avec un espacement axial, par rapport à l'axe central (R), tel que, entre lui et l'anneau de paliers d'aubes (6) se trouve la couronne d'aubes directrices (7) ; et
une douille (45), susceptible d'être insérée dans l'ouverture centrale (53) ou la tubulure d'échappement centrale (10) du carter de turbine (2), de manière que la douille (45) puisse être insérée et fixée avec les aubes de guidage dans sa tubulure d'échappement centrale (10),
**caractérisées en ce que**
la douille (45) est réalisée en appui sur une butée (29) déformable axialement et présente, sur sa périphérie extérieure, un agencement pour la fixation avec liaison à ajustement de formes sur la tubulure d'échappement (10) centrale du carter de turbine (2).

2. Aubes de guidage selon la revendication 1, **caractérisées en ce que** l'agencement d'obtention de la fixation avec liaison à ajustement de formes de la douille (45) comprend un filetage extérieur (50) de la douille (45) ou un filetage intérieur (50) de la tubulure axiale (10), sachant que, de préférence, le filetage extérieur (50) n'est réalisé que sur une partie de la longueur axiale de la douille (45), en particulier sur une partie située entre ces deux extrémités.

3. Aubes de guidage selon la revendication 1 ou 2, **caractérisées en ce que** la douille (45) est en appui sur le disque (29), et **en ce que** ce disque (29) est réalisé, déformable en direction axiale, à l'intérieur d'un espace libre (12, 13) prévu sur les deux côtés.

4. Aubes de guidage selon la revendication 3, **caractérisées en ce que** le disque (29), sur la face venant en contact avec la paroi de turbine (2b'), sur une partie, venant se placer contre la douille (45) en direction radiale de cette surface, est évidé de manière que le disque (29) puisse effectuer un déplacement axial.

5. Aubes de guidage selon la revendication 3 ou 4, **caractérisées en ce que** le disque (29), dans sa zone radialement extérieure, présente un agencement de fixation (48, 49') utilisant une liaison à ajustement de formes, de manière à pouvoir être bloqué par serrage dans la zone radialement extérieure, alors que, par contre, dans la zone radialement intérieure, faisant de préférence au moins la moitié du rayon, en particulier à peu près trois tiers, il est réalisé de façon à être déformable.

6. Turbocompresseur de suralimentation muni d'aubes de guidage selon l'une des revendications précédentes, comprenant au moins un carter de turbine (2), présentant une tubulure d'échappement (10) centrale, **caractérisé en ce que** la douille (45) est en appui sur une butée (29) déformable axialement, alors que, par contre, elle est fixée avec une liaison à ajustement de formes dans la tubulure d'échappement (10).

7. Turbocompresseur de suralimentation selon la revendication 6, **caractérisé en ce qu'**un agencement, servant à la fixation par une liaison à ajustement de formes, comprend un filetage extérieur (50) de la douille (45) ou un filetage intérieur (50) de la tubulure axiale (10), sachant que, de préférence, le filetage extérieur (50) n'est réalisé que sur une partie de la longueur axiale de la douille (45), en particulier sur une partie située entre ses deux extrémités.

8. Turbocompresseur de suralimentation selon la revendication 6 ou 7, **caractérisé en ce que** la douille (45) est placée en appui sur le disque (29) faisant office de butée, et **en ce que** ce disque (29) est réalisé de façon à être déformable en direction axiale.

9. Turbocompresseur de suralimentation selon la revendication 8, **caractérisé en ce que** le disque (29), sur la surface en contact avec la paroi de turbine (2b'), sur une partie, située contre la douille (45) en direction radiale, de cette surface, est évidé, de manière à lui permettre un déplacement axial.

10. Turbocompresseur de suralimentation selon l'une des revendications 6 à 9, **caractérisé en ce que** le disque (29), dans sa zone radialement extérieure, présente un dispositif de fixation (48, 49') fonctionnant par une liaison à ajustement de formes, de manière à pouvoir être bloqué par serrage dans la zone radialement extérieure, alors que, par contre, il est réalisé de façon déformable dans la zone radialement intérieure, faisant de préférence au moins la moitié du rayon, en particulier à peu près deux tiers du rayon.
